# EUROPEAN PATENT SPECIFICATION

(11) **EP 1 056 617 B1**
(45) Date of publication and mention of the grant of the patent: **22.02.2006**
(21) Application number: 98952861.7
(22) Date of filing: 06.11.1998
(51) Int. Cl.: B60P 7/13, G01G 19/08, B65D 90/00

(54) **SECURING MECHANISM**
BEFESTIGUNGSVORRICHTUNG
MECANISME DE FIXATION

(30) Priority: 08.11.1997 GB 9723565
(43) Date of publication of application: 06.12.2000
(73) Proprietor: Sheward, Philip, Chigwell, Essex IG7 4HN (GB)
(72) Inventor: Sheward, Philip, Chigwell, Essex IG7 4HN (GB)
(74) Representative: Lawrence, Malcolm Graham
(86) International application number: PCT/GB1998/003318
(87) International publication number: WO 1999/024287

(56) References cited:
- WO-A-89/08568
- WO-A-96/02446
- DE-B- 2 312 402

## Description

This invention relates to a device for securing a container or a load platform to a vehicle chassis according to the preamble of claim 1.

A device of this type is disclosed in WO 96/02446.

The device normally used to perform the singular function of locking a carrying platform or container to a vehicle chassis is known as a twistlock, it is in relation to such an item that the invention will be explained.

A twistlock is a device that is generally made of metal. It is usually a cast steel central pin, supported by a fabricated metal frame, which allows for the pin to locate and then rotate to lock within the ISO standard corner box which is constructed within the carrying platform or container. Although perfectly adequate at performing this function, the twistlock serves only this one function.

Due to the rapidly changing nature of cargo, ie electronic and computerised equipment, and the global transportation of such, some major problems have become increasingly evident. Shock and vibration damage in transit is one, the other two being gross weight and the distribution of that weight. Cargo handling within the container industry has been reduced to simply the consignee and the recipient; in other words, the container is sealed closed when loaded and normally not opened until reaching its destination. Therefore, a great deal of emphasis is placed upon the consignee being both equipped and able to load correctly and safely the loads being despatched.

Unfortunately, whether by ignorance or simply not being aware of the correct procedures, as well as not appreciating the arduous conditions a container encounters on its journey, safe preparation and loading is rarely accomplished.

With regard to the shock and vibration damage encountered, the only reduction has been by the increase and design of various types of packaging, this being the obvious solution. Nevertheless, it is quite often very expensive and obtrusive and still remains barely able to absorb high impacts to the container in transit caused by heavy dockside handling equipment and poor road conditions.

As to the weight of the cargo and its correct distribution across the load platform this is a major problem worldwide. The laws determining such things as gross weight and axle loading vary greatly from country to country and, in North America for example, state to state. To enable a consignee to accurately load a container, they would require a detailed route plan to its destination, a description of the relative weights and measures laws relevant to each country or state, plus the equipment required to load and determine its balance during that loading.

With the above problems in mind, combined with many other structural related stresses caused by the transportation of these containers, both to the carrying vehicles and their handling equipment, a simple and very inexpensive solution has been developed.

The invention allows for instant recognition of the weight and its distribution during loading, allowing an instant aid at the offset, plus provides a good deal of shock and vibration protection during the cargo's journey.

Very important during the development of this invention was the ability to produce a reasonably inexpensive yet reliable tool ensuring its commercial viability and therefore providing safety as well as financial benefits to the users.

According to the present invention there is provided a device for securing a container or a load platform to a vehicle chassis comprising:
a) an outer cylinder body, comprising means for removably securing the device to the vehicle chassis;
b) a compression chamber containing a compression material;
c) a piston located within the compression chamber and resting upon the compression material;
d) a support plate, extending above the cylinder body and co-operating with the piston;
e) means for at least part of the compression material to be expelled when the piston is forced downwards;
f) a lock pin passing through the outer cylinder body, the piston and the support plate and being securable within the device, the lock pin including at one end thereof a lock clamp that is adapted to locate within a location lock receptacle in the container or load platform and, upon twisting, to lock the container or load platform and the device together.

The device preferably comprises means whereby the amount of compression material expelled when the piston is forced downwards may be measured to provide an indication of the weight of the container or load platform. Such measuring means preferably then allows the amount of expelled material to be indicated to an operator, either directly on a gauge or indirectly at a remote site within the confines of the vehicle. The connection to a gauge is preferably via hydraulic tubing, which may optionally include means for slowing the outflow of compression material such as flow restriction areas, snuffer valves or elbow connections. The gauge may be connected directly to the device of the invention or it may be located remotely and connected by, for example, umbilical tubing. Alternatively, the amount of compression material expelled may be measured and recorded by a transducer affixed to the device of the invention, the transducer transmitting this information by means of a low voltage radio signal to a remote receiver located, for example, in the cabin of the vehicle.

By including means for slowing the outflow of compression material, the device of the invention will provide good shock absorbing properties in use.

The device of the invention is located normally at the outside perimeter of the vehicle chassis but not restricted to such, and can be sited as reasonable. The device normally would operate as a minimum of four units allowing for even attachment to the load carrying platform or container, but not restricted to any combination or number as many chassis carry more than one load platform or container, often of differing dimensions.

The device is preferably pre-loaded prior to use, allowing for accurate displacement of the compression material assisting accuracy of load indication. This pre-loading may be achieved by inserting compression material into the compression chamber when it is not under load. A preferred means of inserting compression material is a non-return load valve.

Most preferably, the device of the invention will be suitable for use with an ISO container, although use with other containers may also be achieved by use of suitable lock clamps.

The lock pin of the device of the invention preferably comprises a centre pin that passes through the outer cylinder body, the piston and the support plate of the device of the invention, the lock clamp being attached at one end of the centre pin, and a (preferably removable) means being attached at the other end to retain the lock pin within the device. The means for retaining the lock pin within the device of the invention may comprise, for example, a removable cotter pin or a base plate which is either permanently attached or is removably attached, for example, by means of a screw thread located at the end of the lock pin.

The lock clamp may be detachable from the centre pin allowing different lock clamps to be affixed for use with varying receiving points in different containers or load platforms. Preferably, the lock pin is removable from the device of the invention, allowing different lock pins having different lock clamps permanently attached thereto to be used, and also allowing for its use in a reverse position, ie to weigh, lock and absorb shock when a container or load platform is suspended from the device of the invention.

Preferably the lock pin is provided with means to facilitate rotation when the lock clamp is inserted into a location lock receptacle on a container or load bed. These means may comprise, for example, an integral laterally extending handle or a connection point for a removable spanner or handle.

Preferably the means for securing the device of the invention to the vehicular chassis comprises a bracket; for example, a rotational bracket or an adjustable bracket such that the device may be conveniently displaced when it is not required.

The component parts of the device of the invention are made of metal, the strength and quality of the metal being selected to conform to the stresses to be applied thereto. Preferred metals include steel and aluminium. It will be appreciated that various parts of the device of the invention may be constructed either as single entities or from component parts; for example, the load plate may be constructed as a continuous part with the piston or it may be constructed as a separate component and secured in the finished device by conventional means.

Any suitable material may be used as the compression material (eg liquids-; gels or compressed gases). However, it is preferred that this material has good flow properties such as provided by conventional hydraulic fluids or oils.

Where necessary sealing may be provided within the device of the invention by any conventional means, for example, by the use of appropriate washers, or compressable seal rings, etc.

The size of the device of the invention will be comparabie to conventional twistlocks and in particular the lock clamps will conform to conventional lock clamps so that the device of the invention may be used in place of conventional twistlocks with minimal adaptation. For example, an overall size of 100mm by 100mm for the outer casing will be suitable, with a connection bracket of up to 75mm and the support plate and lock clamp together measuring a further 75mm.

The invention will now be described by way of example with reference to the accompanying drawings in which:
Figure 1 shows a cross sectional drawing (not to scale) of the device from the frontal view;
Figure 2 shows a cross sectional drawing of the device (not to scale) from a side view, also showing the rotated view of the lock clamp;
Figure 3 illustrates a container unit as loaded upon a vehicle demonstrating the position of the device in relation to both the vehicle chassis and the container;
Figure 4 illustrates a rear view of the container in relation to the carrying vehicle and the device;
Figure 5 shows an exploded view of the device as attached to both carrying vehicles chassis and containers locking receptacle;
Figure 6 shows an example of a carrying vehicle loaded with a combination of load carrying units on one vehicle requiring a multiple number of devices;
Figure 7 illustrates the need for a rotational connecting bracket, as when a load platform is loaded to outermost locking points it is required that other lock points be unobtrusive;
Figure 8 shows a cutaway drawing of the lock with the central pin and lock clamp position reversed, allowing for underslung location and hoist;
Figure 9 describes by way of drawing a situation requiring the device to be used in an underslung position; in this drawing a dockside mobile container carrier is used for example.

In the drawings the reference numerals refer to the following items:
1. Lock pin
2. Retaining washer
3. Compression chamber
4. Handle locating hole
5. Non-return valve
6. Hydraulic piping
7. Outer cylinder body
8. Piston
9. Indicates compression area.
10. Support plate
11.Lock clamp
12.Inner cylinder body
13.Compression material
14.Vehicle chassis
15.Rotational connecting bracket
16.Location lock receptacle
17.Container or load platform
18.Cotter pin
19.Base plate

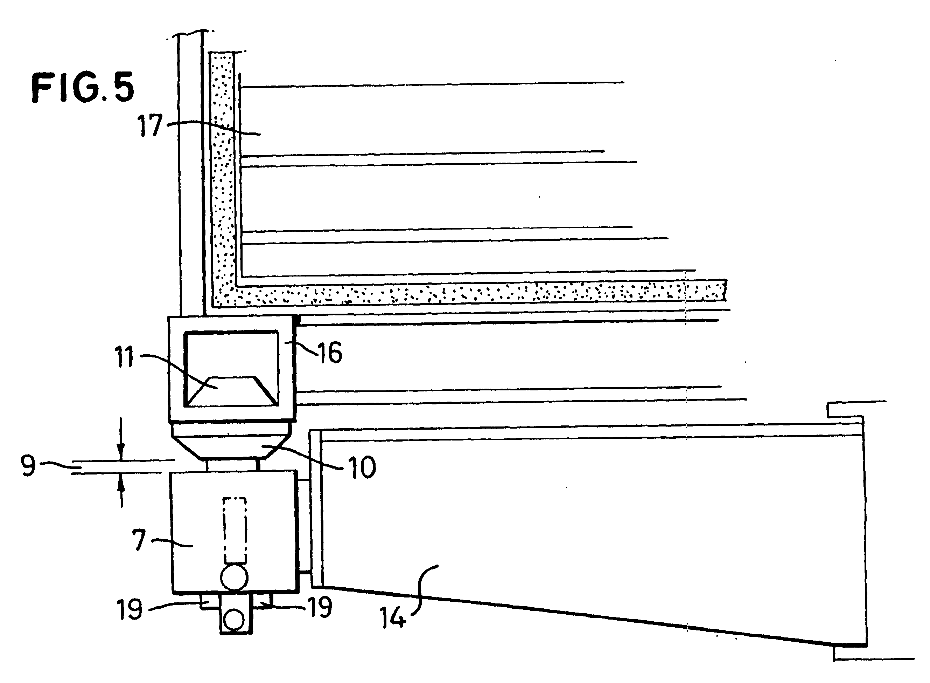

The outer cylinder casing 7 is attached to the vehicle chassis 14 by means of the connecting bracket 15. The demountable container/load platform 17 is lowered onto the support plate 10 and then the lock clamp 11 is rotated by means of the lock pin 1, whereby a secure fixing is achieved as shown in Figure 5; the load platform/container 17 is lowered onto the support plate 10, the weight is transferred through the piston 8 whereby a compression is created by piston 8 being forced downward within outer cylinder body 12, and piston 8 encroaching into compression chamber 3 forcing compression material 13 outward through a first non-return valve 5 to a measuring device (not shown).

A second non-return valve, which can be located either left or right fitting, is provided at the same position as the first non-return valve 5, to allow for preloading of compression area 9.

When the container load platform 17 is lowered onto support plate 10, at various locations a visual readout will allow for recognition of load in tonnes or kilograms at each point of connection, allowing instant recognition of uneven weight distribution or gross weight by adding all readings together.

To remove load platform or container 17 from support plate 10, rotation of lock clamp 11 is required via lock pin 1.

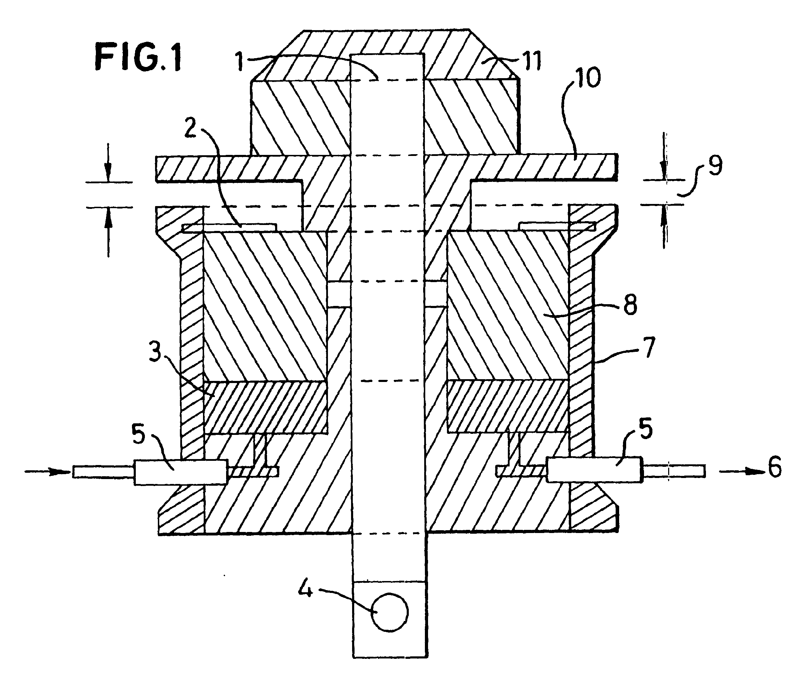

Compression chamber 3 is created between inner cylinder body 12 being sited within outer cylinder body 7. As described in Figure 1, various seals are located within the construction (not shown) as required.

Lock pin 1 has a handle locating hole 4 for the purpose of attaching a handle (not shown) for the purpose of ease of operation.

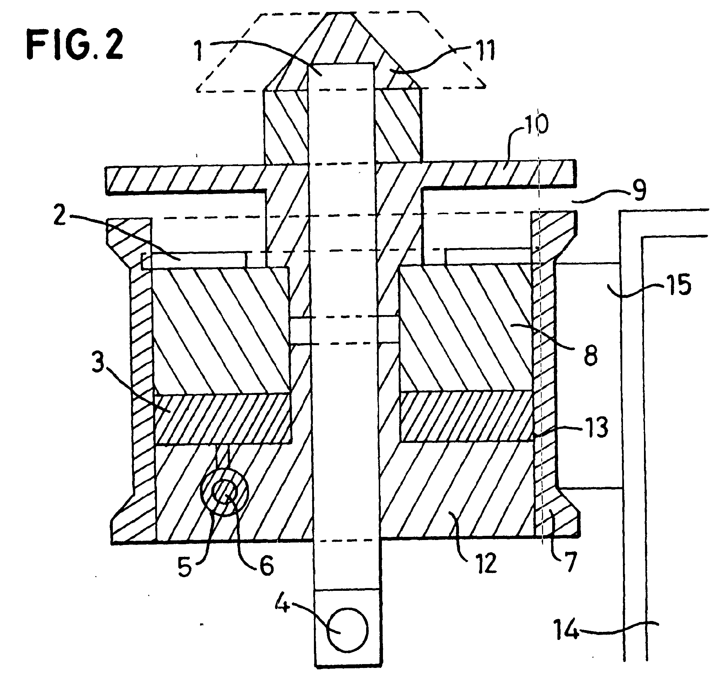

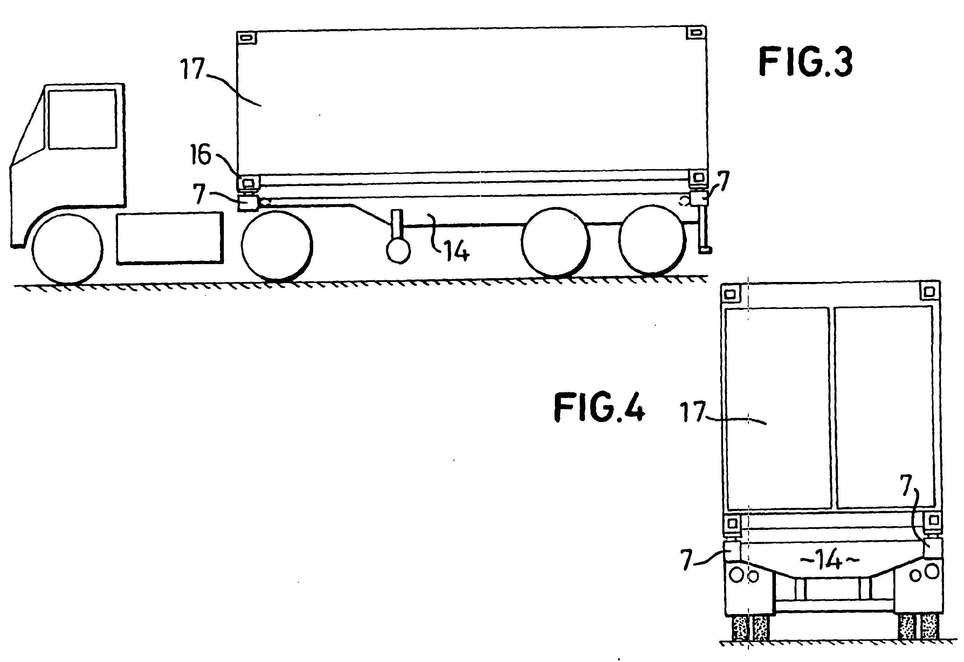

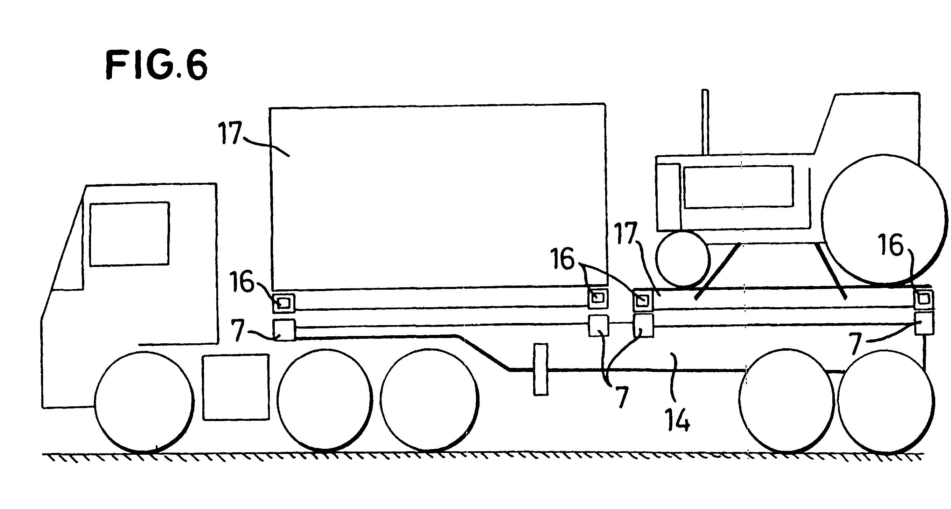

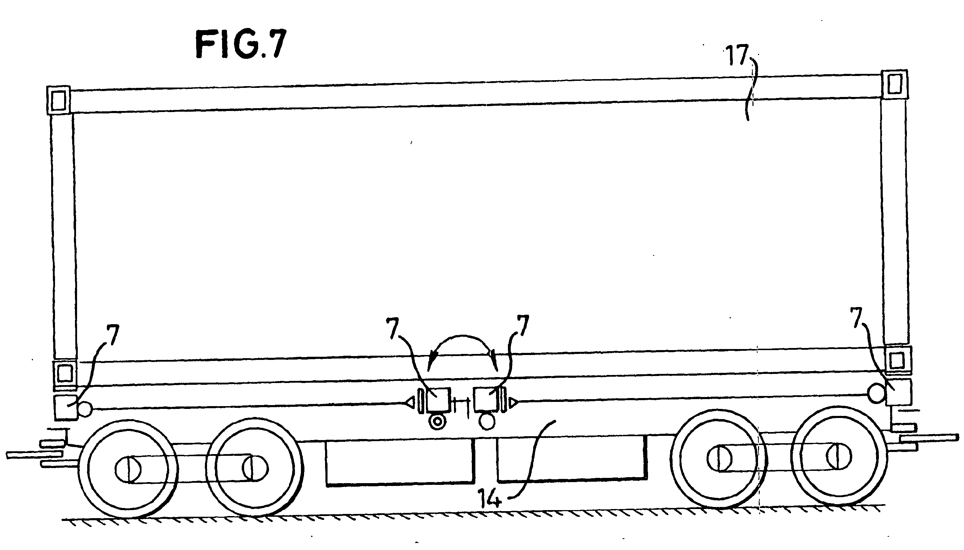

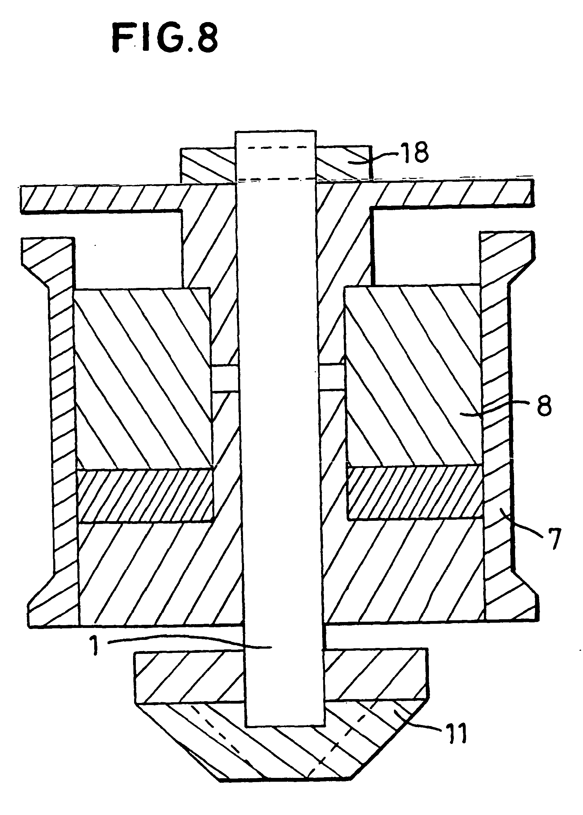

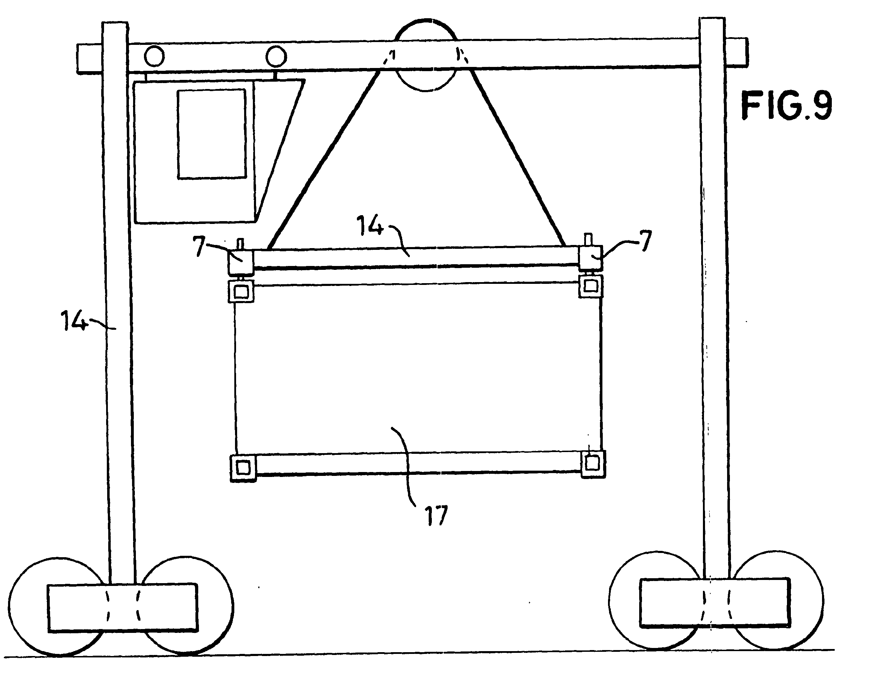

To use the device in the underslung position as shown in Figure 9, the lock pin 1 and the lock clamp 11 are removed from the device and replaced in reverse position. In this configuration the device would be attached to a chassis 14 by rotating connecting bracket 15. In this situation the device would be lowered as attached to chassis 14 to locate container or load platform 17 from above (see Figure 9), whereupon lockpin 1 and lock clamp 11 would be rotated to lock. As shown in Figure 8, the lock pin 1 is retained in the device by inserting a cotter pin 18 through the handle locating hole 4. It will be appreciated that this method may also be used to retain the lock pin 1 in the device when it is used in the orientation shown in Figures 1 to 7. Alternatively, the lock pin 1 may be secured in the device by the addition of a base plate 19 which may be screwed onto the distal end of the lock pin 1 as shown in Figure 5.

## Claims

1. A device for securing a container or a load platform (17) to a vehicle chassis (14) comprising:
a) an outer cylinder body (7) comprising means (15) for removably securing the device to the vehicle chassis (14);
b) a piston (8) ;
c) a support plate (10) extending above the cylinder body (7) and co-operating with the piston (8);
d) a lock pin (1) passing through the outer cylinder body and the support plate and being securable within the device, the lock pin (1) including at one end thereof a lock clamp (11) that is adapted to locate within a location lock receptacle (16) in the container or load platform (17) and, upon twisting, to lock the container or load platform (17) and the device together; **characterised in that** the lock pin (1) passes through the piston (8), and **in that** the device further comprises
e) a compression chamber (3) containing a compression material (13); the piston (8)
located within the compression chamber (3) and resting upon the compression material (13);
f) means (5) for at least part of the compression material (13) to be expelled when the piston (8) is forced downwards;

2. A device as claimed in claim 1 further comprising means to measure the amount of compression material (13) that is expelled when the piston is forced downwards.

3. A device as claimed in claim 2 wherein the amount of compression material expelled is indicated on a gauge attached directly to the device or remotely within the confines of the vehicle.

4. A device as claimed in any previous claim and further comprising means (5) to insert compression material (13) into the compression chamber (3) when it is not under load.

5. A device as claimed in any previous claim wherein the lock clamp (11) is removable from the lock pin (1) so that different sized or shaped lock clamps (11) may be fitted to correspond to different location lock receptacles.

6. The use of a device substantially as claimed in any previous claim to secure a container or load platform to a vehicle chassis and to provide an estimation of the total weight of, and weight distribution within, the container or load platform.

## Patentansprüche

1. Vorrichtung zum Befestigen eines Containers oder eines Ladungsaufbaus (17) an einem Fahrzeugchassis (14), mit:
a) einem äußeren Zylinderkörper (7) mit Mitteln (15) zum lösbaren Befestigen der Vorrichtung an dem Fahrzeugchassis (14);
b) einem Kolben (8);
c) einer über den Zylinderkörper (7) verlaufenden und mit dem Kolben (8) zusammenwirkenden Halteplatte (10);
d) einem sich durch den äußeren Zylinderkörper und die Halteplatte erstreckenden Arretierstift (1), der innerhalb der Vorrichtung befestigbar ist, wobei der Arretierstift (1) an seinem einen Ende ein Arretierelement (11) umfasst, das sich innerhalb einer Einsatzortarretieraufnahme (16) in dem Container oder dem Ladungsaufbau (17) anzuordnen vermag und auf ein Drehen hin den Container oder Ladungsaufbau (17) und die Vorrichtung miteinander verriegelt,
**dadurch gekennzeichnet, dass** der Arretierstift (1) sich durch den Kolben (8) erstreckt und dass die Vorrichtung ferner aufweist
e) eine ein Kompressionsmaterial (13) enthaltende Kompressionskammer (3), wobei der Kolben (8) innerhalb der Kompressionskammer (3) angeordnet ist und auf dem Kompressionsmaterial (13) ruht;
f) Mittel (5), damit zumindest ein Teil des Kompressionsmaterials (13) ausgestoßen wird, wenn der Kolben (8) nach unten gedrängt wird.

2. Vorrichtung nach Anspruch 1, ferner umfassend Mittel zum Messen der Menge an Kompressionsmaterial (13), die ausgestoßen wird, wenn der Kolben nach unten gedrängt wird.

3. Vorrichtung nach Anspruch 2, bei der die Menge an ausgestoßenem Kompressionsmaterial auf einem Anzeigeinstrument angezeigt wird, welches unmittelbar an der Vorrichtung oder entfernt davon innerhalb der Grenzen des Fahrzeugs angebracht ist.

4. Vorrichtung nach einem der vorhergehenden Ansprüche, ferner umfassend Mittel (5) zum Einbringen von Kompressionsmaterial (13) in die Kompressionskammer (3), wenn sie lastfrei ist.

5. Vorrichtung nach einem der vorhergehenden Ansprüche, bei der das Arretierelement (11) von dem Arretierstift (1) lösbar ist, so dass unterschiedlich große oder geformte Arretierelemente (11) angebracht werden können, um unterschiedlichen Einsatzortarretieraufnahmen zu entsprechen.

6. Verwendung einer Vorrichtung im Wesentlichen wie in einem der vorhergehenden Ansprüche beansprucht zum Befestigen eines Containers oder Ladungsaufbaus an einem Fahrzeugchassis und zum Angeben einer Abschätzung des Gesamtgewichts und der Gewichtsverteilung innerhalb des Containers oder Ladungsaufbaus.

## Revendications

1. Dispositif de fixation d'un container ou d'une plate-forme de chargement (17) sur un châssis de véhicule (14) comprenant :
a) un corps cylindrique extérieur (7) comprenant des moyens (15) pour fixer de manière amovible le dispositif au châssis du véhicule (14) ;
b) un piston (8) ;
c) une plaque de support (10) s'étendant au-dessus du corps cylindrique (7) et coopérant avec le piston (8) ;
d) un goujon de blocage (1) passant à travers le corps cylindrique extérieur et la plaque de support et pouvant être fixé à l'intérieur du dispositif, le goujon de blocage (1) comprenant sur l'une de ses extrémités une bride de fixation (11) adaptée pour se placer en position à l'intérieur d'un logement de blocage de positionnement (16) dans le container ou dans la plate-forme de chargement (17) et pour fixer par son pivotement le dispositif et le container ou la plate-forme de chargement (17) l'un à l'autre,
**caractérisé en ce que** le goujon de blocage (1) traverse le piston (8) et **en ce que** le dispositif comprend de plus :
e) une chambre de compression (3) contenant une matière de compression (13) : le piston (8) étant situé dans la chambre de compression (3) et reposant sur la matière de compression (13) ;
f) des moyens (5) pour au moins une partie de la matière de compression (13) devant être évacuée lorsque le piston (8) est contraint d'aller vers le bas.

2. Dispositif selon la revendication 1 comprenant de plus des moyens pour mesurer la quantité de matière de compression (13) qui est évacuée lorsque le piston est contraint d'aller vers le bas.

3. Dispositif selon la revendication 2 dans lequel la quantité de la matière de compression évacuée est indiquée sur une jauge fixée directement sur le dispositif ou à distance à une extrémité du véhicule.

4. Dispositif selon l'une quelconque des revendications précédentes comprenant de plus des moyens (5) pour insérer la matière de compression (13) dans la chambre de compression (3) lorsqu'elle n'est pas en charge.

5. Dispositif selon l'une quelconque des revendications précédentes dans lequel la bride de fixation (11) peut être déplacée du goujon de blocage (1) de sorte que des brides de fixation (11) de différentes dimensions ou formes puissent être ajustées de manière à correspondre aux différents logements de blocage de positionnement.

6. Utilisation d'un dispositif essentiellement tel que décrit dans les revendications précédentes permettant de fixer un container ou une plate-forme de chargement à un châssis de véhicule et de fournir une évaluation du poids total et de la répartition pondérale dans le container ou la plate-forme de chargement.
